# EUROPEAN PATENT SPECIFICATION

(11) **EP 4 258 782 B1**
(45) Date of publication and mention of the grant of the patent: **11.03.2026**
(21) Application number: 23193928.1
(22) Date of filing: 27.09.2019
(51) Int. Cl.: H04L 5/00, H04W 72/04, H04W 72/1268, H04W 72/566

(54) **APPARATUSES, METHODS, AND COMPUTER READABLE STORAGE MEDIUM FOR RESOURCE CONTROL**
VORRICHTUNG, VERFAHREN UND COMPUTERLESBARES SPEICHERMEDIUM ZUR RESSOURCENSTEUERUNG
APPAREIL, PROCÉDÉ ET SUPPORT D'INFORMATIONS LISIBLE PAR ORDINATEUR POUR COMMANDE DE RESSOURCES

(30) Priority: 27.09.2018 CN 201811133690; 31.10.2018 CN 201811291514; 23.04.2019 CN 201910329324; 17.07.2019 CN 201910647673; 09.08.2019 CN 201910736480
(43) Date of publication of application: 11.10.2023
(62) Divisional of application: 19867947.4
(73) Proprietor: Samsung Electronics Co., Ltd., Suwon-si, Gyeonggi-do 16677 (KR)
(72) Inventor: FU, Jingxing, Beijing 100028 (CN); YU, Bin, Beijing 100028 (CN); QIAN, Chen, Beijing 100028 (CN); SUN, Feifei, Beijing 100028 (CN)
(74) Representative: Gulde & Partner

(56) References cited:
- PANASONIC: "On NR URLLC L1 enhancements", vol. RAN WG1, no. Gothenburg, Sweden; 20180820 - 20180824, 10 August 2018 (2018-08-10), XP051516200, Retrieved from the Internet <URL:http://www.3gpp.org/ftp/tsg%5Fran/WG1%5FRL1/TSGR1%5F94/Docs/R1%2D1808827%2Ezip> [retrieved on 20180810]
- HUAWEI ET AL: "Potential RAN1 impacts on intra-UE prioritization", vol. RAN WG1, no. Gothenburg, Sweden; 20180820 - 20180824, 11 August 2018 (2018-08-11), XP051516711, Retrieved from the Internet <URL:http://www.3gpp.org/ftp/tsg%5Fran/WG1%5FRL1/TSGR1%5F94/Docs/R1%2D1809347%2Ezip> [retrieved on 20180811]
- QUALCOMM INCORPORATED: "Remaining issues for multiplexing UCI on PUSCH", vol. RAN WG1, no. Sanya, China; 20180416 - 20180420, 15 April 2018 (2018-04-15), XP051427071, Retrieved from the Internet <URL:http://www.3gpp.org/ftp/Meetings%5F3GPP%5FSYNC/RAN1/Docs/> [retrieved on 20180415]
- CATT: "Corrections to UCI feedback procedures", vol. RAN WG1, no. Gothenburg, Sweden; 20180820 - 20180824, 17 August 2018 (2018-08-17), XP051517063, Retrieved from the Internet <URL:http://www.3gpp.org/ftp/tsg%5Fran/WG1%5FRL1/TSGR1%5F94/Docs/R1%2D1809713%2Ezip> [retrieved on 20180817]
- SAMSUNG: "Updates to TS 38.213", vol. RAN WG1, no. Gothenburg, Sweden; 20180820 - 20180824, 11 August 2018 (2018-08-11), XP051516117, Retrieved from the Internet <URL:http://www.3gpp.org/ftp/tsg%5Fran/WG1%5FRL1/TSGR1%5F94/Docs/R1%2D1808744%2Ezip> [retrieved on 20180811]

## Description

### Technical Field

The present application relates to the field of wireless communication technologies, particularly to a method performed by a user equipment, a user equipment, a method performed by a base station and a base station.

### Background Art

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, MTC, and M2M communication may be implemented by beamforming, MIMO, and array antennas. Application of a cloud Radio Access Network (RAN) as the above-described Big Data processing technology may also be considered to be as an example of convergence between the 5G technology and the IoT technology.

In the New Radio (NR) system, the user equipment (UE) can simultaneously transmit uplink data with different priorities in one serving cell, or the UE simultaneously transmits uplink data with different priorities in different serving cells, for example Enhanced Mobile Broadband (eMBB) data and Ultra Reliability Low Latency Communication (URLLC) data, and URLLC data transmission has a higher priority than the eMBB data transmission.

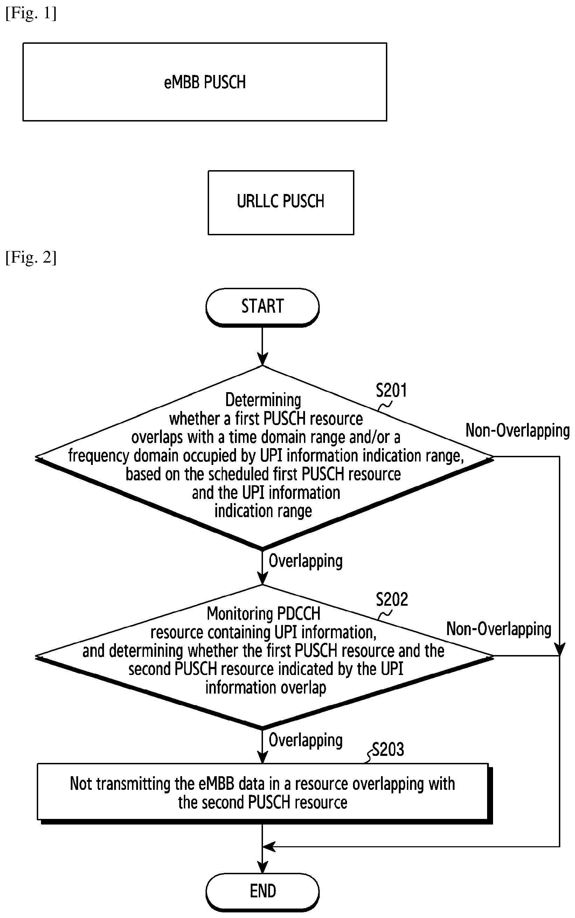

The lengths of the time unit for transmitting eMBB data and the time unit for transmitting URLLC data may be different. As shown in FIG. 1, the time unit for transmitting eMBB data is longer than the time unit for transmitting URLLC data, how to ensure the reduction of interference from each other during transmitting eMBB data and transmitting URLLC has become a technical problem that need to be solved urgently.

3GPP TSG RAN WG1 Meeting #94 "On NR URLLC L1 enhancements", R1-1808827(XP51516200A), concerns NR URLLC L1 enhancements, wherein section 3.2 discloses for URLLC PUCCH overlapping eMBB PUSCH case, Tx prioritization such as dropping or puncturing eMBB PUSCH.

### Disclosure of Invention

### Solution to Problem

The purpose of the present application is to at least solve one of the above technical drawbacks, and in particular to ensure that the problem of mutual interference is reduced when transmitting Enhanced Mobile Broadband (eMBB) data and transmitting Ultra Reliability Low Latency Communication (URLLC) data.

The invention is defined by the appended claims. The description that follows is subjected to this limitation. Any disclosure lying outside the scope of said claims is only intended for illustrative as well as comparative purposes.

In a first aspect, the application provides a resource control method, including the following steps:
determining whether a first Physical Uplink Shared Channel (PUSCH) resource overlaps with a time domain range and/or a frequency domain range occupied by UPI (URLLC (Ultra Reliability Low Latency Communication) Preemption Indication) information indication range, based on the scheduled first PUSCH resource and the UPI information indication range, wherein, the first PUSCH resource is used to transmit Enhanced Mobile Broadband (eMBB) data, the UPI information indication range indicates a time domain range and/or a frequency domain range to be occupied by a second PUSCH, wherein the second PUSCH resource is used to transmit URLLC data;
if the first PUSCH resource overlaps with the time domain range and/or the frequency domain range occupied by the UPI information indication range, monitoring a Physical Downlink Control Channel (PDCCH) resource containing UPI information, and determining whether the first PUSCH resource and the second PUSCH resource indicated by the UPI information overlap, if overlapping, not transmitting the eMBB data in a resource overlapping with the second PUSCH resource.

In a second aspect, the application provides a user equipment, including:
a first processing unit configured to determine whether a first PUSCH resource overlaps with a time domain range and/or a frequency domain range occupied by UPI information indication range, based on the scheduled first PUSCH resource and the UPI information indication range, wherein, the first PUSCH resource is used to transmit eMBB data, the UPI information indication range indicates the time domain range and/or the frequency domain range to be occupied by a second PUSCH resource, wherein the second PUSCH resource is used to transmit URLLC data;
a second processing unit configured to monitor a PDCCH resource containing UPI information if the first PUSCH resource overlaps with the time domain range and/or the frequency domain range occupied by the UPI information indication range, and determining whether the first PUSCH resource and the second PUSCH resource indicated by the UPI information overlap, if overlapping, not transmitting the eMBB data in resource overlapping with the second PUSCH resource.

In a third aspect, the application provides an electronic device, including:
at least one processor; and
at least one memory connected to the processor, and
a bus,
wherein, the processor and the memory complete a communication with each other through the bus,
the processor is configured to invoke program instructions in the memory to perform the above resource control method.

In a fourth aspect, the application provides a computer readable storage medium, the computer readable storage medium comprises a memory and a processor, the memory configured to store a computer program, when executed by the processor, implementing steps of the above resource control method.

In the application, it is determined whether a first PUSCH resource and a time domain range and/or a frequency domain range occupied by UPI information indication range overlap according to the scheduled first PUSCH resource and the UPI information indication range, the first PUSCH resource is used to transmit the eMBB data, and the UPI information indication range is used to indicate a time domain range and/or a frequency domain range to be occupied by a second PUSCH resource, where the second PUSCH resource is used to transmit URLLC data; if the first PUSCH resource overlaps with the time domain range and/or the frequency domain range occupied by the UPI information indication range, monitoring a PDCCH resource containing the UPI information, and determining whether the first PUSCH resource and the second PUSCH resource indicated by the UPI information overlap, and if overlapping, not transmitting the eMBB data in the resource overlapping with the second PUSCH resource, which implements effective control of resources, ensures that URLLC data can be transmitted in time, reduces the impact of transmitting URLLC data on transmitting eMBB data, and reduces waste of transmission resources.

The additional aspects and advantages of the present application will be set forth in part in the description which follows.

### Brief Description of Drawings

The above and/or additional aspects and advantages of the present application will become apparent and easily understood from the following description of embodiments, taken in conjunction with the accompanying drawings, in which:
FIG. 1 is a schematic diagram showing lengths of time unit for transmitting Enhanced Mobile Broadband (eMBB) data and time unit for transmitting Ultra Reliability Low Latency Communication (URLLC) data in the prior art, provided by an embodiment of the present application;
FIG. 2 is a flowchart of a resource control method provided by an embodiment of the present application;
FIG. 3 is a schematic diagram which is an overlap of PUSCH resources for transmitting URLLC data and Physical Uplink Shared Channel (PUSCH) resources for transmitting eMBB data in a slot, provided by an embodiment of the present application;
FIG. 4 is a schematic diagram of a time domain position and/or a frequency domain position of a Downlink Control Information (DCI) carrying URLLC Preemption Indication (UPI) information in an Orthogonal Frequency Division Multiplexing (OFDM) symbol of a slot, provided by an embodiment of the present application;
FIG. 5 is a schematic diagram of PUSCH resources occupied by transmitting URLLC data in OFDM symbol 0, provided by an embodiment of the present application;
FIG. 6 is a schematic diagram of PUSCH resources occupied by transmitting URLLC data in OFDM symbol 2, provided by an embodiment of the present application;
FIG. 7 is a schematic diagram of a time domain position and/or a frequency domain position of a PUSCH resource in which eMBB data is transmitted in an OFDM symbol, provided by an embodiment of the present application;
FIG. 8 is a schematic flowchart of determining whether a UE transmitting eMBB data monitors a Physical Downlink Control Channel (PDCCH) resource of a DCI carrying UPI information, provided by an embodiment of the present application;
FIG. 9 is a schematic diagram that resources indicated by multiple UPI information overlap in a time domain position and/or a frequency domain position, provided by an embodiment of the present application;
FIG. 10 is a schematic diagram of transmission meeting processing time when multiplexing Hybrid Automatic Request-Acknowledge (HARQ-ACK) transmitted in the Physical Uplink Control Channel (PUCCH) resource into a PUSCH resource, provided by an embodiment of the present application;
FIG. 11 is a schematic diagram of transmission not meeting processing time when multiplexing HARQ-ACK transmitted in the PUCCH resource into a PUSCH resource, provided by an embodiment of the present application;
FIG. 12 is a schematic structural diagram of a user equipment, provided by an embodiment of the present application;
FIG. 13 is a schematic structural diagram of an electronic device according to a resource control method, provided by an embodiment of the present application.

### Best Mode for Carrying out the Invention

Embodiments of the present invention will be described in detail hereafter. The examples of these embodiments have been illustrated in the drawings throughout which same or similar reference numerals refer to same or similar elements or elements having same or similar functions. The embodiments described hereafter with reference to the drawings are illustrative, merely used for explaining the present invention and should not be regarded as any limitations thereto.

It should be understood by those skill in the art that singular forms "a", "an", "the", and "said" may be intended to include plural forms as well, unless otherwise stated. It should be further understood that terms "include/including" used in this specification specify the presence of the stated features, integers, steps, operations, elements and/or components, but not exclusive of the presence or addition of one or more other features, integers, steps, operations, elements, components, and/or combinations thereof. It should be understood that when a component is referred to as being "connected to" or "coupled to" another component, it may be directly connected or coupled to other elements or provided with intervening elements therebetween. In addition, "connected to" or "coupled to" as used herein may include wireless connection or coupling. As used herein, term "and/or" includes all or any of one or more associated listed items or combinations thereof.

Unless otherwise defined, all terms (including technical and scientific terms) used herein have the same meaning as commonly understood by those skill in the art to which the present invention belongs. It shall be further understood that terms, such as those defined in commonly used dictionaries, should be interpreted as having a meaning that is consistent with their meanings in the context of the prior art and will not be interpreted in an idealized or overly formal sense unless expressly so defined herein.

It should be understood by a person of ordinary skill in the art that term "terminal" and "terminal apparatus" as used herein compasses not only apparatuses with a wireless signal receiver having no emission capability but also apparatuses with receiving and emitting hardware capable of carrying out bidirectional communication over a bidirectional communication link. Such apparatuses can include cellular or other communication apparatuses with a single-line display or multi-line display or without a multi-line display; Personal Communication Systems (PCSs) with combined functionalities of speech, data processing, facsimile and/or data communication; Personal Digital Assistants (PDAs), which can include RF receivers, pagers, internet/intranet accesses, web browsers, notepads, calendars and/or Global Positioning System (GPS) receivers; and/or conventional laptop and/or palmtop computers or other apparatuses having and/or including a RF receiver. The "terminal" and "terminal apparatus" as used herein may be portable, transportable, mountable in transportations (air, sea and/or land transportations), or suitable and/or configured to run locally and/or distributed in other places in the earth and/or space for running. The "terminal" or "terminal apparatus" as used herein may be a communication terminal, an internet terminal, a music/video player terminal. For example, it may be a PDA, a Mobile Internet Device (MID) and/or a mobile phone with a music/video playback function, or may be apparatuses such as a smart TV and a set-top box. The terminal may be denoted as, besides the terminal, a 'user equipment (UE)', a 'mobile station', a 'subscriber station', a 'remote terminal', a 'wireless terminal', or a 'user device' or other terms having technological meanings equivalent to these.

The base station that transmits signals to the terminal or receives signals from the terminal may be denoted as, besides the base station, an 'access point (AP)', an 'eNodeB (eNB)', a '5th generation node (5gNB)', a 'next generation node B (gNB)', a 'wireless point', a 'transmission/reception point (TRP)' or other terms having technological meanings equivalent to these.

As shown in FIG. 2, it is a flowchart of a resource control method provided by the present application, the method includes the following steps:
Step S201, determining whether the first Physical Uplink Shared Channel (PUSCH) resource overlaps with the time domain range and/or the frequency domain range occupied by the UPI (URLLC Preemption Indication) information indication range, based on the scheduled first PUSCH resource and the UPI information indication range;

Wherein, the first PUSCH resource is used to transmit the Enhanced Mobile Broadband (eMBB) data; the UPI information indication range indicates the time domain range and/or the frequency domain range to be occupied by the second PUSCH resource, and the time domain range and/or the frequency domain range to be occupied is also the range that is possibly occupied by the PUSCH resource for transmitting URLLC data; the second PUSCH resource is used to transmit URLLC data. In other words, in case that the methods are performed by the UE, the UE identifies the first PUSCH resources for eMBB transmissions. The UE identifies the indication range for UPI transmissions. The UE determines whether the first PUCCH resource overlaps with the time domain range and/or the frequency domain range occupied by the indication range. The UE identifies the overlapped region between the eMBB transmissions and the indication range.

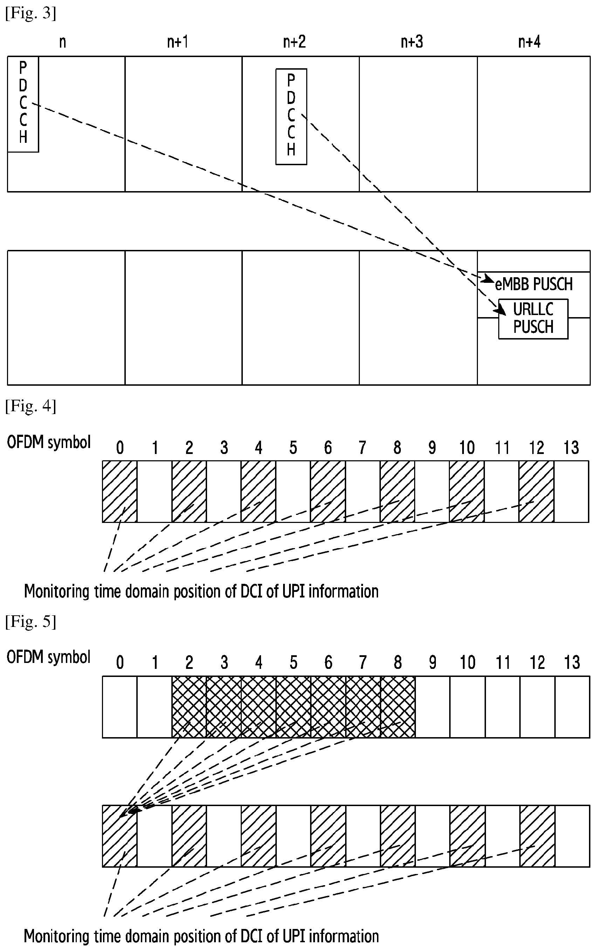

For the embodiment of the present application, since the delay requirements of different service data are different, the priority of the transmission is also different. For example, the transmission priority of the URLLC data is higher than the transmission priority of the eMBB data, and therefore, the transmission of the URLLC data is possibly to occupy the resource that has been scheduled to transmit eMBB data. For example, in the slot n, the Physical Downlink Control Channel (PDCCH) resource transmitted by the gNB schedules the PUSCH resources for transmitting the eMBB data in the slot n+4, while in the slot n+2, gNB monitors that URLLC data is to be transmitted in the slot n+4, but the resources in the slot n+4 have all been scheduled to UE to transmit eMBB data and URLLC data, there is no remained resources for transmitting the new URLLC data. In order to ensure the transmission of URLLC data with high priority, it is necessary to stop some PUSCH resources that have been scheduled for transmitting eMBB data to free some resources, such that in the slot n+2, the PDCCH resource transmitted by the gNB schedules the PUSCH resource for transmitting the URLLC data in the slot n+4, but the PUSCH resource for transmitting the URLLC data may overlap with the PUSCH resource for transmitting the eMBB data, as shown in FIG 3. If the PUSCH resource for transmitting the URLLC data and the PUSCH resource for transmitting the eMBB data simultaneously transmit data in the overlapping resource, the PUSCH resource for transmitting the eMBB data will interfere with the PUSCH resource for transmitting the URLLC data, thereby the reliability of the PUSCH resource for transmitting the URLLC data is reduced. Therefore, it is necessary to stop the PUSCH resource for transmitting the eMBB data overlapping with the PUSCH resource for transmitting the URLLC data, to reduce interference with the URLLC data. However, when the UE transmitting the eMBB data is different from the UE transmitting the URLLC data, the UE of the PUSCH resource for transmitting the eMBB data may not know whether there is a PUSCH resource for transmitting the URLLC data to occupy the PUSCH resource for transmitting the eMBB data, and then one piece of indication information is used to notify the UE transmitting the eMBB data, so that the UE knows which resources are occupied by the PUSCH resource for transmitting the URLLC data, and the indication information is called UPI information. After receiving the UPI information, the UE transmitting the eMBB data stops transmission of the PUSCH resource for transmitting the eMBB data overlapping with the PUSCH resource for transmitting the URLLC data.

In a possible implementation, when the first PUSCH resource overlaps with the time domain range and/or the frequency domain range occupied by the UPI information indication range, step S202 follows the foregoing step S201. If the first PUSCH resource does not overlap with the time domain range and/or the frequency domain range occupied by the UPI information indication range, the procedures are terminated.

Step S202, monitoring a PDCCH resource containing the UPI information, and determining whether the first PUSCH resource and the second PUSCH resource indicated by the UPI information overlap or not. In other words, in case that the methods are performed by the UE, the UE monitors a PDCCH resource including the UPI information. The PDCCH comprises a downlink control information (DCI). If the DCI including the UPI information is detected on the PDCCH resource, the UE obtains the UPI information. The UE identifies the second PUCCH resource indicated by the UPI information.

For the embodiment of the present application, whether the first PUSCH resource and the second PUSCH resource indicated by the UPI information overlap are determined by monitoring the PDCCH resource containing the UPI information. In other words, in case that the methods are performed by the UE, the UE determines whether the first PUSCH resource and the second PUSCH resource indicated by the UPI information overlap are determined by monitoring the PDCCH resource containing the UPI information.

For the embodiment of the present application, the UE may obtain the candidate time domain position of the PDCCH resource carrying the DCI of the UPI information when monitoring by receiving the high layer signaling configuration (e.g., radio control resource (RRC) signaling, or medium access control (MAC) control element (CE)), for example, by receiving the high layer signaling, the UE monitors the PDCCH resources of the DCI carrying the UPI information in the OFDM symbols 0, 2, 4, 6, 8, 10, 12 of each slot, as shown in FIG. 4. The UPI information sent at each time indicates whether the resource in a certain time domain position and/or a certain frequency domain position is occupied by the PUSCH resource for transmitting the URLLC data or not, and the UE determines the time domain position and/or the frequency domain position indicated by each UPI information by using high layer signaling configuration or preconfiguration, for example, the UPI information transmitted in OFDM symbol 0 indicates whether the resources of the OFDM symbols 2, 3, 4, 5, 6, 7, 8 in the slot are occupied by the PUSCH resources for transmitting the URLLC data or not, as shown in FIG. 5. For example, in NR systems, each slot includes 14 OFDM symbols (e.g., indexed by 0 to 13).

In a possible implementation, the UPI information is carried by Downlink Control Information (DCI);
The DCI includes any of the followings:
common DCI;
UE-group DCI;
UE-specific DCI.

For the embodiment of the present application, the UPI information may be transmitted through a common DCI, or a UE-group DCI, or a UE-specific DCI, but is not limited thereto.

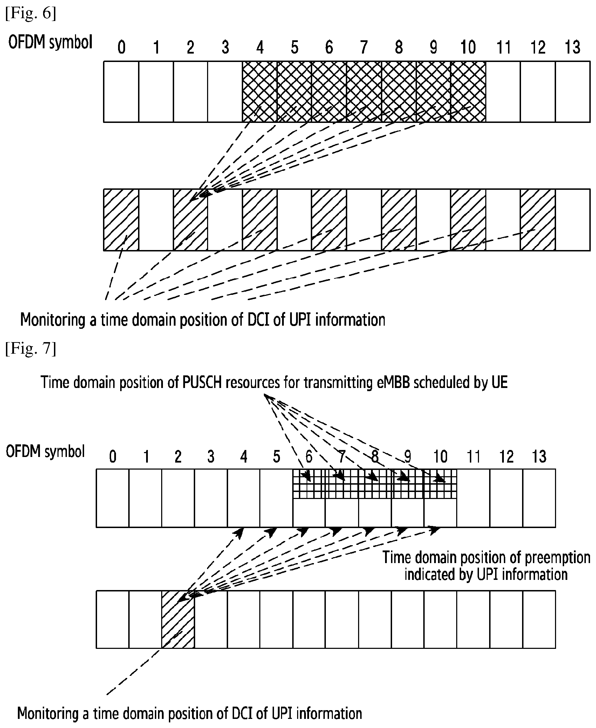

For the embodiment of the present application, the UPI information sent at each time indicates whether the resource in a certain time domain position and/or a certain frequency domain position is occupied by the PUSCH resource for transmitting the URLLC data or not, and the UE determines the time domain position and/or the frequency domain position indicated by each UPI information by using high layer signaling configuration or preconfiguration, for example, the UPI information transmitted in OFDM symbol 0 indicates whether the resources of the OFDM symbols 2, 3, 4, 5, 6, 7, 8 in the slot are occupied by the PUSCH resources of the URLLC data or not, as shown in FIG. 5. The UPI information transmitted in the OFDM symbol 2 indicates whether the resources of the OFDM symbols 4, 5, 6, 7, 8, 9, 10 in the slot are occupied by the PUSCH resources for transmitting the URLLC data or not, as shown in FIG. 6.

After the UE transmitting the eMBB data obtains the time domain position and/or the frequency domain position monitored by the PDCCH resource of the DCI carrying the UPI information through the high layer signaling, the DCI may be monitored in each time domain position and/or frequency domain position, but such processing is relatively expensive.

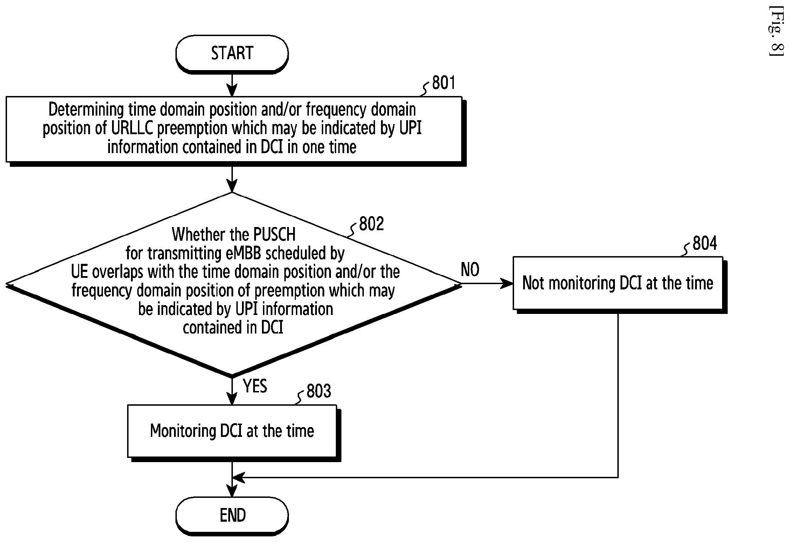

It may also be determined whether to monitor the PDCCH resource of the DCI carrying the UPI information according to the scheduling situation of the PUSCH resource in which the UE transmits the eMBB data, and the specific method may include: while monitoring the PDCCH resource of the DCI carrying the UPI information, determining the time domain position and/or the frequency domain position of the PUSCH resource for transmitting the URLLC data indicated by the UPI information at the time; then determining whether to monitor the PDCCH resource of the DCI carrying the UPI information according to whether the time domain position and/or the frequency domain position of the PUSCH resource for transmitting the eMBB data scheduled by the UE overlaps with that of the PUSCH resource for transmitting the URLLC data indicated by the UPI information, that is, if overlapping, monitoring the corresponding PDCCH resource of the DCI carrying the UPI information, if no overlapping, not monitoring the corresponding PDCCH resources of the DCI carrying the UPI information. For example, the UE transmitting the eMBB data receives the high layer signaling to monitor the PDCCH resource of the DCI carrying the UPI information in the OFDM symbols 0, 2, 4, 6, 8, 10, 12 of each slot, wherein the UPI information in the OFDM symbol 2 in the slot indicates whether the resources of the OFDM symbols 4, 5, 6, 7, 8, 9, 10 in the slot are occupied by the PUSCH resource for transmitting the URLLC data or not. If the PUSCH resource for transmitting the eMBB data scheduled by one UE is in the OFDM symbol 6, 7, 8, 9, 10 in the slot, and the PUSCH resource for transmitting the eMBB data scheduled by the UE overlaps with the resource indicated by the UPI information in the OFDM symbol 2 in the slot, the UE transmitting the eMBB data is going to monitor the PDCCH resource of the DCI carrying the UPI information in the OFDM symbol 2 of the slot, as shown in FIG. 7, if a UE transmitting the eMBB data does not schedule the PUSCH resource in the OFDM symbol 4, 5, 6, 7, 8, 9, 10 of the slot, and the PUSCH resource for transmitting the eMBB data scheduled by the UE may not overlap with the resource indicated by the UPI information in the OFDM symbol 2 of the slot, then the UE does not need to monitor the PDCCH resource of the DCI carrying the UPI information in the OFDM symbol 2 of the slot, so that the energy consumption caused by the UE transmitting the eMBB data to monitor the PDCCH resource of the DCI carrying the UPI information may be saved. A method flow for determining whether a UE transmitting eMBB data monitors a PDCCH resource of a DCI carrying UPI information is shown in FIG. 8.

Referring to FIG.8, in step 801, the UE determines time domain position and/or frequency domain position of URLLC preemption which may be indicated by UPI information contained in DCI in one time. In step 802, the UE determines whether the PUSCH for transmitting eMBB scheduled by UE overlaps with the time domain position and/or frequency domain position of preemption which may be indicated by UPI information contained in DCI. If t the PUSCH for transmitting eMBB overlaps the the time domain position and/or frequency domain position of the preemption, the UE preforms the step 803. In step 803, the UE monitors DCI at the time. If the PUSCH the PUSCH for transmitting eMBB does not overlap the the time domain position and/or frequency domain position of the preemption, the UE preforms the step 804. the UE does not monitor DCI at the time. In our various embodiments, the unit of the time may be a symbol, a group of sybmols, or one or more slots.

In a possible implementation, the processing for determining whether the first PUSCH resource overlaps with the second PUSCH resource indicated by the UPI information, includes:
when the time domain positions and/or the frequency domain positions of the second PUSCH resources indicated by the at least two pieces of UPI information overlap, determining whether the first PUSCH resource and the overlapping second PUSCH resources overlap according to the at least two pieces of UPI information.

Further, the determining whether the first PUSCH resource overlaps with the overlapping second PUSCH resource according to the at least two pieces of UPI information, includes:
when at least one of the at least two pieces of UPI information indicates that the overlapping second PUSCH resource is occupied, determining that the first PUSCH resource overlaps with the overlapping second PUSCH resource.

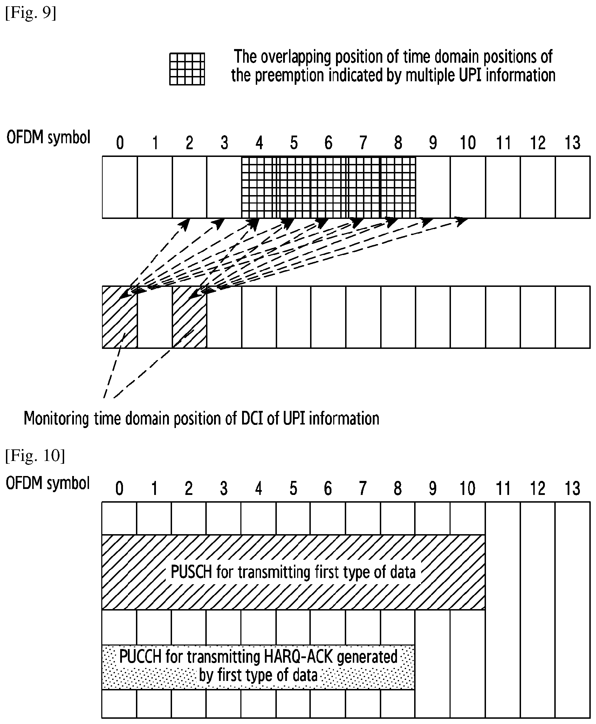

For the embodiment of the present application, for multiple UPI information, the indicated time positions may overlap. For example, as shown in FIG. 9, the UE monitors the PDCCH resource of the DCI carrying the UPI information in the OFDM symbol 0, 2, and the UPI information transmitted in the OFDM symbol 0 indicates whether the resources of OFDM symbol 2, 3, 4, 5, 6, 7, 8 in the slot are occupied by the PUSCH resources for transmitting the URLLC data or not, and the UPI information transmitted in the OFDM symbol 2 indicates whether the resources of the OFDM symbols 4, 5, 6, 7, 8, 9, 10 in the slot are occupied by the PUSCH resources for transmitting the URLLC data or not, wherein the OFDM symbols 4, 5, 6, 7, 8 in the slot indicated by the UPI information transmitted in the OFDM symbol 0 overlap with the OFDM symbols 4, 5, 6, 7, 8 in the slot indicated by the UPI information transmitted in the OFDM symbol 2. At these overlapping positions, the UE may receive only one piece of UPI information, at this time, according to the received UPI information, it is determined whether the resource is occupied by the PUSCH resource for transmitting the URLLC data. At these overlapping positions, the UE receives more than one piece of UPI information, and determines whether the resource is occupied by the PUSCH resource for transmitting the URLLC data or not according to the received more than one piece of UPI information. The specific method is: if one piece of UPI information determines the resource is occupied by the PUSCH resource for transmitting the URLLC data or not, it may be determined that the resource of the overlapping position is occupied by the PUSCH resource for transmitting the URLLC data or not, and the UE transmitting the eMBB data stops the transmission of the PUSCH resource in the overlapping position; and if all the received UPI information determines that the resource is not occupied by the PUSCH resource for transmitting the URLLC data, then it is determined that the resource in the overlapping position is not occupied by the PUSCH resource for transmitting the URLLC data. For example, the time positions indicated by the two pieces of UPI information of UPI-0 and UPI-1 overlap in a time period A. When the UPI value is "0", the resource is occupied by the PUSCH resource for transmitting the URLLC data, and when the UPI value is "1", the resource is not occupied by the PUSCH resource for transmitting the URLLC data. It is determined whether the resource of the overlapping area is occupied by the PUSCH resource for transmitting the URLLC data or not according to the description of Table 1.

**Table 1: Determining whether resources of an overlapping area are occupied by PUSCH resources for transmitting the URLLC data or not according to multiple UPI information**

| UPI-0 value | UPI-1 value | Whether the overlapping area are occupied in the time period A |
|---|---|---|
| 0 | 0 | YES |
| 0 | 1 | YES |
| 1 | 0 | YES |
| 1 | 1 | NO |

Based on the above Table 1, the foregoing conclusion may be obtained: once one piece of UPI information determines that the resource is occupied by the PUSCH resource for transmitting the URLLC data, it may be determined that the resource of the overlapping position is occupied by the PUSCH resource for transmitting the URLLC data, and the UE transmitting the eMBB data stops the transmission of the PUSCH resource of the overlapping position; and if all the received UPI information determines that the resource is not occupied by the PUSCH resource for transmitting the URLLC data, it is determined that the resource of the overlapping position is not occupied by the PUSCH resource for transmitting the URLLC data.

When it is determined that the first PUSCH resource overlaps with the second PUSCH resource, the next procedure is the step 203. If the first PUSCH resource does not overlap with the second PUSCH resource, the procedures are terminated.

Step S203: Not transmitting the eMBB data in the resource overlapping with the second PUSCH resource.

In the present application, it is determined whether the first PUSCH resource and the time domain range and/or the frequency domain range occupied by the UPI information indication range overlap according to the scheduled first PUSCH resource and the UPI information indication range, wherein the first PUSCH resource is used to transmit the eMBB data, and the UPI information indication range is used to indicate a time domain range and/or a frequency domain range to be occupied by the second PUSCH resource, where the second PUSCH resource is used to transmit URLLC data; if the first PUSCH resource overlaps with the time domain range and/or the frequency domain range occupied by the UPI information indication range, monitoring the PDCCH resource containing the UPI information, and determining whether the first PUSCH resource overlaps with the second PUSCH resource indicated by the UPI information, and if overlapping, not transmitting the eMBB data in the resource overlapping with the second PUSCH resource, which implements effective control of resources, ensures that URLLC data can be transmitted in time, reduces the impact of transmitting URLLC data on transmitting eMBB data, and reduces the waste of transmission resources.

The above implementation describes a method for determining whether to monitor the PDCCH resource of the DCI carrying the UPI information according to the scheduling situation of the PUSCH resource in which the UE transmits the eMBB data, wherein, not only the PUSCH but also the Physical Uplink Control Channel (PUCCH) for transmitting the UCI (the UCI here includes HARQ-ACK, Scheduling Requesting (SR), Channel State Information (CSI)), Physical Random Access Channel (PRACH) for random access, and Sounding Reference Signal (SRS) for channel detection are used for performing the eMBB transmission. Some or all of these channels and signals may be occupied by URLLC transmission to ensure the URLLC transmission. However, it is possible that some or all of these channels and signals are not occupied by the URLLC transmission, wherein whether each channel or signal in these channels or signals is occupied by the URLLC transmission may be determined by the preset protocol or the higher layer signaling configuration. If one channel or signal is possibly occupied by the URLLC transmission, the UE preparing to transmit the channel needs to determine whether the resources of the channels and signals overlaps with a time domain range and/or a frequency domain range (the time domain range and/or the frequency domain range may be determined by the preset protocol or the higher layer signaling configuration) occupied by UPI information indication range according to the channel or signal resource in which the UE performs the transmission and the UPI information indication range. If overlapping, the UE needs to monitor the PDCCH of the DCI carrying the UPI information; if not, the UE does not monitor the PDCCH of DCI carrying the UPI information. If monitoring the PDCCH of the DCI carrying the UPI information, the UE determines whether the resources of the channels or signals overlaps with the second PUSCH resource indicated by the UPI information, if overlapping, the UE does not transmit the channels or signals in the resource overlapping with the second PUSCH resource, thereby implementing effective control for resources, ensuring that URLLC data can be transmitted in time, reducing the impact of transmitting URLLC data on transmitting eMBB data, and reducing waste of transmission resources.

In a possible implementation, the information transmitted in the PUSCH resource of the serving cell includes the UCI,

The transmission mode of the UCI includes at least one of the followings:
transmitting in a PUSCH resource corresponding to a serving cell configured with the monitoring of the UPI information;
transmitting in a PUSCH resource corresponding to a serving cell transmitting the eMBB data.

For the embodiment of the present application, the UCI may be transmitted in the PUSCH resource. When the UE configures multiple serving cells, and the UE simultaneously transmits the PUSCH resources in multiple serving cells, the UE transmits the UCI only in the PUSCH resources of one serving cell, the serving cell transmitting the UCI may be the smallest serving cell in the cell index.

When one UE is configured with multiple serving cells, some serving cells only transmit the eMBB data, and some serving cells transmit both eMBB data and URLLC data. The transmission priority of URLLC data is higher than the transmission priority of the eMBB data. Therefore, the transmission of the URLLC data may occupy the resource that has been scheduled to transmit the eMBB data. If the UCI is contained in the PUSCH resource for transmitting the eMBB data that is occupied by transmitting the URLLC data, the UCI is also affected, and therefore, it is necessary to try not to transmit the UCI in the PUSCH resources of such a serving cell. The serving cell in which the PUSCH resource of the UCI is transmitted may be determined according to whether the PUSCH resource of the serving cell is occupied by the PUSCH resource for transmitting the URLLC data or not, or whether the PUSCH resource of the serving cell may be occupied by the PUSCH resource for transmitting the URLLC data. The specific method may include: if the UE is configured with multiple serving cells, and some of the serving cells configure the UE to receive UPI information, the PUSCH resources that has been scheduled by such serving cell to transmit the eMBB data may be occupied by the transmission of the URLLC data, thereby stopping some or all of the PUSCH resource transmission, therefore PUSCH resource for transmitting UCI in such serving cell has a low priority; some of the serving cells do not configure the UE to receive UPI information, the PUSCH resource has been scheduled by the serving cell to transmit eMBB data cannot be occupied by the transmission of the URLLC data, and the PUSCH resource for transmitting UCI in such serving cell has a high priority, and the PUSCH resources for transmitting the UCI are selected according to the priority from high to low. For example, the UE is configured with two serving cells, which are the serving cell A and the serving cell B respectively. The UE is configured to monitor UPI information in the serving cell A, and the UE are not configured to monitor the UPI information in the serving cell B, and the PUSCH resource for transmitting UCI in the serving cell A has low priority, and the PUSCH resource for transmitting UCI in the serving cell B has high priority.

When one UE is configured with multiple serving cells, some serving cells only transmit the eMBB data, and some serving cells transmit both the eMBB data and URLLC data. The transmission priority of the URLLC data is higher than the transmission priority of the eMBB data. Therefore, the transmission of the URLLC data may overlap in the resource that has been scheduled to transmit the eMBB data. If the UCI is contained in the PUSCH resource for transmitting the eMBB data that is overlapped by the PUSCH for transmitting the URLLC data, the UCI may be greatly affected by the interference, so it is necessary to try not to transmit the UCI of the eMBB in the PUSCH resource of the serving cell, and the serving cell in which the PUSCH resource of the UCI is transmitted may be determined according to whether the PUSCH resource of the serving cell is overlapped with the PUSCH resource for transmitting the URLLC data, or whether the PUSCH resource of the serving cell may be overlapped by the PUSCH resource for transmitting the URLLC data. The specific method may include: if the UE is configured with multiple serving cells, the priority of the PUSCH for transmitting the UCI in each serving cell may be configured by using high layer signaling, and then the PUSCH for transmitting the UCI is selected according to the priority of the PUSCH for transmitting the UCI from high to low. For example, the UE is configured with two serving cells, which are serving cell A and serving cell B respectively. The UE is configured to have a higher priority for transmitting UCI in the serving cell A, and the UE is configured to have a lower priority for transmitting UCI in the serving cell B. When the UE schedules a PUSCH in both the serving cell A and the serving cell B in one slot, the UE transmits the UCI in the PUSCH resource of the serving cell A.

When a UE is configured with multiple serving cells, and the UE simultaneously transmits PUSCH resources in multiple serving cells, the PUSCH resources of some of the serving cell transmit the eMBB data, and the PUSCH resources of some of the serving cell transmit the URLLC data, the requirements for reliability and latency of the URLLC data transmission are higher than that of the eMBB data transmission.

The transmission of the UCI in the PUSCH resource will occupy the PUSCH resource, and the transmission of the UCI affects the performance of the PUSCH resource. Since the requirements for reliability and latency of the transmission of the URLLC data are high, if the UCI of the eMBB data is to be transmitted, try not to affect the transmission of the URLLC data, that is, try not to transmit the UCI of the eMBB data in PUSCH resources for transmitting the URLLC data, and try to contain the UCI in the PUSCH resource for transmitting the eMBB data, the URLLC data is less affected accordingly. Therefore, when the UCI of the eMBB data is transmitted, the priority of the PUSCH resource for transmitting the eMBB data is higher than the PUSCH resource for transmitting the URLLC data. The specific method may include: if the UE is configured with multiple serving cells, some of the serving cell schedules the PUSCH resource for transmitting the URLLC data, and some of the serving cell schedules the PUSCH resource for transmitting the eMBB data, the UCI for transmitting the eMBB data is transmitted in the PUSCH resource for transmitting the eMBB data.

For the embodiment of the present application, due to the existence of the eMBB data and URLLC data, and the existence of the URLLC data with different reliability and delay requirements, the reliability and delay requirements of the UCI of the eMBB data and the UCI of the URLLC data are also different, there are multiple types of data and UCI according to reliability and latency requirements. For example, there are two types: first type of data and its UCI with higher reliability and delay requirements, such as HARQ-ACK information of URLLC uplink data and URLLC downlink data; second type of data and its UCI with lower reliability and delay requirements, such as the HARQ-ACK information of the eMBB uplink data and the eMBB downlink data. If the PUSCH resource and the PUCCH resource cannot be simultaneously transmitted, since the URLLC data is not frequently transmitted, when the URLLC data overlaps with the eMBB data or the UCI for transmitting the eMBB, the eMBB data or the UCI for transmitting the eMBB data may be discarded because the discard of the eMBB data or the UCI for transmitting the eMBB does not have large effect. Wherein, the first type of data and the second type of data may be determined according to a CRC-scrambled RNTI of a PDCCH resource that schedules PDSCH resource or PUSCH resource for transmitting data, for example, the PUSCH resource for transmitting the first type of data is scheduled by PDCCH resource in which CRC scrambling is performed by the C 1-RNTI, and the PUSCH resource for transmitting the second type of data is scheduled by PDCCH resource in which the CRC scrambling is performed by C2-RNTI, and the PDSCH resource for transmitting the HARQ of the first type of data is scheduled by PDCCH resource in which CRC scrambling is performed by C1-RNTI, the PDSCH resource for transmitting the HARQ-ACK of second type of data is scheduled by PDCCH in which CRC scrambling is performed by C2-RNTI.

In a possible implementation, the embodiment of the present application further includes the following processing:
the transmission modes of transmitting the eMBB data, the URLLC data, and the UCI is determined based on the occupancy of the resource corresponding to the eMBB data, the occupancy of the resource corresponding to the URLLC data, and the resource condition of the UCI, wherein the UCI includes the UCI for transmitting the eMBB data and the UCI for transmitting the URLLC data.

The above processing specifically includes:
(1) if the PUSCH resource for transmitting the URLLC data overlaps with the resource occupied by the PUCCH resource of the UCI transmitting the eMBB data, transmitting the URLLC data in the PUSCH resource;
   For the embodiment of the present application, when there is no PUSCH resource for transmitting the eMBB data, only the PUSCH resource for transmitting the URLLC data and the PUCCH resource of the UCI transmitting the eMBB data overlap, the PUCCH resource of the UCI transmitting the eMBB data is discarded, the URLLC data is transmitted in the PUSCH resource.
(2) if the PUSCH resource for transmitting the URLLC data overlaps with the resource occupied by the PUCCH resource of the UCI transmitting the URLLC data, the URLLC data and the UCI transmitting the URLLC data is transmitted in the PUSCH resource;
   For the embodiment of the present application, when the PUSCH resource for transmitting the URLLC data and the PUCCH resource of the UCI transmitting the URLLC data overlap, the PUCCH resource of the UCI transmitting the URLLC data is multiplexed in the PUSCH resource for transmitting the URLLC data;
(3) if the PUSCH resource for transmitting the eMBB data overlaps with the resource occupied by the PUCCH resource of the UCI transmitting the URLLC data, the UCI of the URLLC data is transmitted in the PUCCH resource;
   For the embodiment of the present application, when there is no PUSCH resource for transmitting the URLLC data, only the PUSCH resource for transmitting the eMBB data and the PUCCH resource of the UCI transmitting the URLLC data overlap, the PUSCH resource for transmitting the eMBB data is discarded, the UCI of the URLLC data is transmitted in the PUCCH resource;
(4) if the PUSCH resource for transmitting the eMBB data overlaps with the resource occupied by the PUCCH resource of the UCI transmitting the eMBB data, the eMBB data and the UCI transmitting the eMBB data is transmitted in the PUSCH resource.

For the embodiment of the present application, when the PUSCH resource for transmitting the eMBB data and the PUCCH resource of the UCI transmitting the eMBB data overlap, the PUCCH resource of the UCI transmitting the eMBB data is multiplexed in the PUSCH resource for transmitting the eMBB data.

In other words, the PUCCH resource of the UCI having the same priority as the transmission of the PUSCH resource may be multiplexed in the PUSCH resource, and the PUCCH resource of the UCI having different priority from the transmission of PUSCH resource may not be multiplexed in the PUSCH resource, the PUSCH resource or the PUCCH resource of UCI is discarded according to the priority of the PUSCH resource and the PUCCH resource of UCI.

For the embodiments of the present application, when the PUSCH resources of different types of data are simultaneously scheduled in different serving cells, and the HARQ-ACKs of different types of data are to be transmitted in the PUCCH resources, the HARQ-ACK information is multiplexed into the PUSCH resources of the same type of data for transmission. For example, the UE is configured with two serving cells, in the slot n, in the serving cell 1, the gNB schedules the PUSCH-1 resource for transmitting the eMBB data, and in the serving cell 2, the gNB schedules the PUSCH-2 resource for transmitting the URLLC data, and in the slot n, the UE needs to transmit the HARQ-ACK-1 of the eMBB data generated by the PDSCH resource for transmitting the eMBB data, and the UE also needs to transmit the HARQ-ACK-2 of the URLLC data generated by the PDSCH resource for transmitting the URLLC data, then the HARQ-ACK-1 is multiplexed in the PUSCH-1 resource for transmission, and the HARQ-ACK-2 is multiplexed in the PUSCH-2 resource for transmission. With this method, it is possible to meet the requirements for different time processing for different service data reception.

For the embodiments of the present application, different types of PUSCH resources and PUCCH resources may be simultaneously transmitted, while the same types of PUSCH resources and PUCCH resources may not be simultaneously transmitted. For example, the PUSCH resource for transmitting the first type of data may not be transmitted simultaneously with the PUCCH resource for transmitting the HARQ-ACK generated by the downlink first type of data, and the PUSCH resource for transmitting the second type of data may not be transmitted simultaneously with the PUCCH resource for transmitting the HARQ-ACK generated by the downlink second type of data, and the PUSCH resource for transmitting the first type of data may be simultaneously transmitted with the PUCCH resource for transmitting the HARQ-ACK generated by the downlink second type of data, and the PUSCH resource for transmitting the second type of data may be simultaneously transmitted with the PUCCH resource for transmitting the HARQ-ACK generated by the downlink first type of data.

For the embodiments of the present application, some types of PUSCH resources and PUCCH resources may be simultaneously transmitted, and some types of PUSCH resources and PUCCH resources may not be simultaneously transmitted. For example, the PUSCH resource for transmitting the first type of data may not be transmitted simultaneously with the PUCCH resource for transmitting the HARQ-ACK generated by the downlink first type of data, and the PUSCH resource for transmitting the second type of data may be simultaneously transmitted with the PUCCH resource for transmitting the HARQ-ACK generated by the downlink second type of data, and whether each type of PUSCH resource and PUCCH resource may be simultaneously transmitted is determined by the high layer signaling independent configuration. Different types of PUSCH resources and PUCCH resources may be transmitted simultaneously. For example, the PUSCH resource for transmitting the first type of data may be transmitted simultaneously with the PUCCH resource transmitting the HARQ-ACK generated by the downlink second type of data, and the PUSCH resource for transmitting the second type of data may be simultaneously transmitted with the PUCCH resource for transmitting the HARQ-ACK generated by the downlink first type of data.

For the embodiments of the present application, any of PUSCH resources and PUCCH resources may not be simultaneously transmitted, that is, same types of PUSCH resources and PUCCH resources may not be simultaneously transmitted, and different types of PUSCH resources and PUCCH resources may also not be simultaneously transmitted.

If the PUSCH resources for transmitting the same type of data and the PUCCH resources of the HARQ-ACK generated by the same type of data overlap in time, the UE does not consider that the condition that one of the PUSCH resources for transmitting the same type of data and the PUCCH of HARQ-ACK generated by the same type of data which are overlapped can meet requirements for processing time while the other one cannot meet will not exist, but both can meet the requirements for processing time. In this way, when the UE needs to multiplex the HARQ-ACK in the PUCCH resource for transmitting the HARQ-ACK generated by the same type of data, which is overlapped with the PUSCH resource, in the PUSCH resource for transmitting the same type of data, there is no case that the processing time is not met.

The processing time requirements of PUSCHs for different types of data are very different. For example, the processing latency of PUSCH resources for transmitting eMBB data and PUSCH resources for transmitting URLLC data are very different, so the processing time requirements are very different. If the PUSCH resources for transmitting the different types of data and the PUCCH resources of the HARQ-ACK generated by the different types of data overlap in time, the UE considers that the condition that one of the PUSCH resources for transmitting the same type of data and the PUCCH resources of HARQ-ACK generated by the same type of data which are overlapped can meet requirements for processing time while the other one cannot meet the requirements for processing time will exist. In this way, when the UE needs to multiplex the HARQ-ACK in the PUCCH resource for transmitting the HARQ-ACK generated by the same type of data, which is overlapped with the PUSCH resource, in the PUSCH resource for transmitting the same type of data, the processing time may not be met. Therefore, the UE is unable to multiplex the HARQ-ACK in the PUCCH resource for transmitting the HARQ-ACK generated by the different type data, which is overlapped with the PUSCH resource, in the PUSCH resource for transmitting the different type of data.

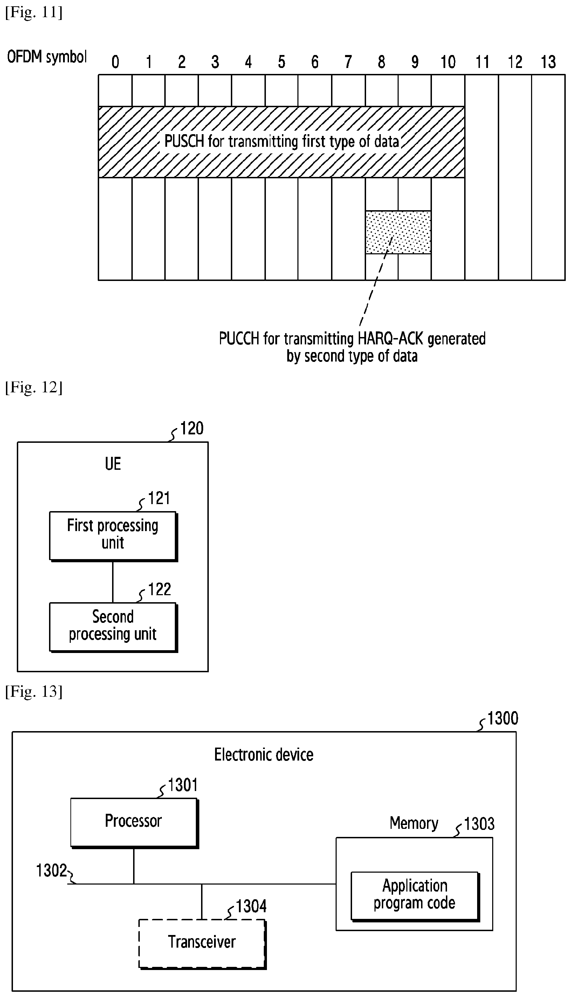

For example, the PUSCH resource for transmitting the first type of data starts to be transmitted in the first OFDM symbol of the slot n, and continues from the first symbol to the end of the tenth OFDM symbol. The PUCCH resource for transmitting the HARQ-ACK generated by the first type of data starts to be transmitted in the first OFDM symbol of the slot n, and continues from the first symbol to the end of the eighth OFDM symbol, and the PUSCH resource and the PUCCH resource simultaneously meet the requirements for processing time, therefore, it is no problem to multiplex the HARQ-ACK transmitted in the above PUCCH resource in the above PUSCH resource, as shown in FIG. 10. The PUSCH resource for transmitting the first type of data starts to be transmitted in the first OFDM symbol of the slot n, and continues from the first symbol to the end of the tenth OFDM symbol. The PUCCH resource for transmitting the HARQ-ACK generated by the second type of data starts to be transmitted at the eighth OFDM symbol of the slot n, and continues from the eighth symbol to the end of the ninth OFDM symbol, and the above HARQ-ACK transmitted in the PUCCH resource is multiplexed in the above PUSCH resource, which will not meet the requirements for processing time, since PUSCH resources have already started to be transmitted when PUCCH resources are to be transmitted, as shown in FIG. 11. The above description is only a preferred embodiment of the present application and a description of the principles of the applied technology. It should be understood by those skilled in the art that the scope of the invention involved in the present application is not limited to the specific combination formed by the above technical features, and should also cover other technical solutions formed by any combination of the above technical features or equivalent features thereof without departing from the inventive concept, for example, the technical solution formed by replacing the above features with the technical features having similar functions as disclosed in the present application (but not limited to).

In the present application, it is determined whether the first PUSCH resource and the time domain range and/or frequency domain range occupied by the UPI information indication range overlap according to the scheduled first PUSCH resource and the UPI information indication range, wherein the first PUSCH resource is used to transmit the eMBB data, and the UPI information indication range is used to indicate a time domain range and/or a frequency domain range to be occupied by the second PUSCH resource, where the second PUSCH resource is used to transmit URLLC data; if the first PUSCH resource overlaps with the time domain range and/or the frequency domain range occupied by the UPI information indication range, monitoring the PDCCH resource containing the UPI information, and determining whether the first PUSCH resource overlaps with the second PUSCH resource indicated by the UPI information, and if overlapping, not transmitting the eMBB data in the resource overlapping with the second PUSCH resource, which implements effective control of resources, ensures that URLLC data can be transmitted in time, reduces the impact of transmitting URLLC data on transmitting eMBB data, and reduces the waste of transmission resources.

Based on the foregoing resource control method provided by the present application, the present application further provides a user equipment. As shown in FIG. 12, the user equipment 120 includes: a first processing unit 121 and a second processing unit 122.

The first processing unit 121 is configured to determine, based on the scheduled first PUSCH resource and the UPI information indication range, whether the first PUSCH resource overlaps with a time domain range and/or a frequency domain range occupied by the UPI information indication range; the first PUSCH resource is used to transmit the eMBB data, and the UPI information indication range is used to indicate a time domain range and/or a frequency domain range to be occupied by the second PUSCH resource, the second PUSCH is used to transmit URLLC data;

The second processing unit 122 is configured to: if the first PUSCH resource overlaps with a time domain range and/or a frequency domain range occupied by the UPI information indication range, monitoring a PDCCH resource containing the UPI information, and determining whether the first PUSCH resource and the second PUSCH resources indicated by the UPI information overlap, if overlapping, not transmitting the eMBB data in the resource overlapping with the second PUSCH resource.

In a possible implementation, the second processing unit 122 is configured to determine, whether the first PUSCH resource overlaps with the overlapping second PUSCH resource according to the at least two pieces of UPI information when time domain positions and/or frequency domain positions of the second PUSCH resources indicated by the at least two pieces of UPI information overlap.

In a possible implementation, the second processing unit 122 is configured to determine that the first PUSCH resource overlaps with the overlapping second PUSCH resource, when at least one of the at least two pieces of UPI information indicates that the overlapping second PUSCH resource is occupied.

In one possible implementation, the UPI information is carried in the DCI;
wherein, the DCI includes any of the followings:
common DCI;
UE-group DCI;
UE-specific DCI.

In one possible implementation, the information transmitted in the PUSCH resource of the serving cell contains the UCI,

The UCI transmission method includes at least one of the following:
transmitting in a PUSCH resource corresponding to a serving cell configured with the monitoring of the UPI information;
transmitting in a PUSCH resource corresponding to a serving cell transmitting the eMBB data.

In a possible implementation, the first processing unit 121 is further configured to determine the transmission modes of transmitting the eMBB data, the URLLC data, and the UCI based on occupancy of the resource corresponding to the eMBB data, occupancy of the resource corresponding to the URLLC data, and resource condition of the UCI, and the UCI includes the UCI for transmitting the eMBB data and the UCI for transmitting the URLLC data.

In a possible implementation, the first processing unit 121 is specifically configured to:
transmitting the URLLC data in the PUSCH resource, if the PUSCH resource for transmitting the URLLC data overlaps with the resource occupied by the PUCCH resource of the UCI for transmitting the eMBB data;
transmitting the URLLC data and the UCI for transmitting the URLLC data in the PUSCH resource, if the PUSCH resource for transmitting the URLLC data overlaps with the resource occupied by the PUCCH resource of the UCI for transmitting the URLLC data;
transmitting the UCI of the URLLC data in the PUCCH resource, if the PUSCH resource for transmitting the eMBB data overlaps with the resource occupied by the PUCCH resource of the UCI for transmitting the URLLC data;
transmitting the eMBB data and the UCI for transmitting the eMBB data in the PUSCH resource, if the PUSCH resource for transmitting the eMBB data overlaps with the resource occupied by the PUCCH resource of the UCI for transmitting the eMBB data.

In the present application, it is determined whether the first PUSCH resource and the time domain range and/or the frequency domain range occupied by the UPI information indication range overlap according to the scheduled first PUSCH resource and the UPI information indication range, wherein the first PUSCH resource is used to transmit the eMBB data, and the UPI information indication range is used to indicate a time domain range and/or a frequency domain range to be occupied by the second PUSCH resource, where the second PUSCH resource is used to transmit URLLC data; if the first PUSCH resource overlaps with the time domain range and/or the frequency domain range occupied by the UPI information indication range, monitoring the PDCCH resource containing the UPI information, and determining whether the first PUSCH resource overlaps with the second PUSCH resource indicated by the UPI information, and if overlapping, not transmitting the eMBB data in the resource overlapping with the second PUSCH resource, which implements effective control of resources, ensures that URLLC data can be transmitted in time, reduces the impact of transmitting URLLC data on transmitting eMBB data, and reduces the waste of transmission resources.

When the UE is configured to multiplex two or more service types of UCI in one PUSCH (the difference of the service type may be determined by the format of the DCI, or other methods, and is not constrained here), the number of HARQ-ACK bits for different services is determined separately, the codebooks of the HARQ-ACK of different services are configured to be semi-static or dynamic by high-level signaling, and the Downlink Assignment Index (DAI) of different services is also indicated by different fields.

When the UE is configured to multiplex two or more service types of UCI in one PUSCH (the difference of the service type may be determined by the format of the DCI, or other methods, and is not constrained here), the resource multiplexing factor (beta_offset) of the UCI for different services is also configured to be semi-static or dynamic independently, and when the resource multiplexing factor of UCI is configured as a dynamic indicator, the resource multiplexing factor indicator (beta_offset indicator) of UCI indicates respectively with different fields. The correspondence between the resource multiplexing factor indicator and the resource multiplexing factor is as shown in Table 2.

**Table 2: Resource multiplexing factor indicator and resource multiplexing factor**

| Resource multiplexing factor indicator | Resource multiplexing factor | |
|---|---|---|
| | PUSCH multiplexing UCI is eMBB PUSCH | PUSCH multiplexing UCI is URLLC PUSCH |
| 00 | beta_offset-1-1 | beta_offset-2-1 |
| 01 | beta_offset-1-2 | beta_offset-2-2 |
| 10 | beta_offset-1-3 | beta_offset-2-3 |
| 11 | beta_offset-1-4 | beta_offset-2-4 |

When the UE is configured to multiplex two or more service types of UCI in one PUSCH, the PUSCH multiplexing UCI may be selected from PUSCHs that transmit different services according to priorities from high to low, the priority of the PUSCH multiplexing UCI may be determined by receiving the high-level signaling configuration, or be pre-determined by protocol, or be determined by the format of the DCI scheduling the PUSCH. For example, the PUSCH transmitting the eMBB service preferentially multiplexes the UCI of the eMBB service, and the PUSCH transmitting the URLLC service preferentially multiplexes the UCI of the URLLC service, or the PUSCH transmitting the eMBB service preferentially multiplexes the UCI of the eMBB service and the UCI of the URLLC service, or the PUSCH transmitting the URLLC service preferentially multiplexes the UCI of the eMBB service and the UCI of the URLLC service. For the PUSCH of the same type of service, the PUSCH multiplexing UCI is selected according to the index of the PUSCH.

In order to improve the transmission performance of the PUSCH, the PUSCH needs to repeat the transmission multiple times. Each repetition is referred as a nominal repetition, and a nominal repetition is separated into at least two parts, each of which is referred as an actual repetition. How to multiplex the UCI in the actual PUSCH repetition is a problem to be studied, when the nominal PUSCH repetition is separated into at least two actual PUSCH repetitions. The following illustrates an example in which the nominal PUSCH is separated into at least two actual PUSCH repetitions.

### First method:

In a method, the UCI is multiplexed in one of two actual PUSCH repetitions separated from a nominal PUSCH repetition, and a method to select an actual PUSCH repetition from two actual PUSCH repetitions separated from a nominal PUSCH repetition is needed. The UCI is multiplexed in the selected actual PUSCH repetition, if the selected actual PUSCH repetition satisfies a predetermined condition (the predetermined condition will be described below); otherwise, the UCI is not multiplexed in an selected actual PUSCH repetition. The selection method will be described below.

In a method, the UCI is multiplexed in an actual PUSCH repetition with more resources, so that the performance of the UCI can be better ensured. For example, a nominal PUSCH is separated into two actual PUSCH repetitions, the number of PRBs in the frequency domain of the two actual PUSCH repetitions are the same, the first actual PUSCH repetition includes 4 OFDM symbols, and the second actual PUSCH repetition includes 8 OFDM symbols, therefore the second actual PUSCH repetition includes more resources, and then the UCI is multiplexed in the second actual PUSCH repetition. If the resources of the two actual PUSCH repetitions are the same, the UCI is multiplexed in the first actual PUSCH repetition.

In another method, the UCI is multiplexed in the first actual PUSCH repetition that satisfies the predetermined condition, so that the performance of the UCI can be ensured. For example, the PUSCH is separated into two actual PUSCH repetitions, and the number of PRBs in the frequency domain of the two actual PUSCH repetitions are the same. The first actual PUSCH repetition includes 2 OFDM symbols, the second actual PUSCH repetition includes 8 OFDM symbols. If the PUSCH repetition with 2 OFDM symbols does not satisfy the requirement for multiplexing UCI, and the PUSCH repetition with 8 OFDM symbols satisfies the requirement for multiplexing UCI, the UCI is multiplexed in the second actual PUSCH repetition that satisfies the requirements for multiplexing UCI.

In yet another method, whether the UCI is multiplexed in the first actual PUSCH repetition or the second actual PUSCH repetition is determined by a protocol. In such way, the implementing by a protocol enable reduce the complexity.

### Second method:

In one method, the UCI is multiplexed in two actual PUSCH repetitions separated from a nominal PUSCH. In another method, the UCI is multiplexed in two actual PUSCH repetitions separated from a nominal PUSCH, if the two actual PUSCH repetitions separated from the nominal PUSCH satisfy a predetermined condition; otherwise, the UCI is not multiplexed in two actual PUSCH repetitions separated from a nominal PUSCH repetition.

### Third method:

When a nominal PUSCH repetition is separated into two actual PUSCH repetitions, the UCI is not multiplexed in the separated two actual PUSCH repetitions. Specifically, the UCI is discarded, and only the PUSCH is transmitted; or, the PUSCH is discarded, and the UCI is transmitted only in the PUCCH.

### Fourth method:

If the UE is configured with at least two serving cells, there are PUSCH transmissions in the at least two serving cells in a time unit, wherein PUSCHs of some serving cells are two actual PUSCH repetitions separated from a nominal PUSCH, and PUSCHs of some serving cells are not two actual PUSCH repetitions separated from a nominal PUSCH (for example, the PUSCH is a PUSCH without repetition, or the PUSCH is a PUSCH repetition defined by 3GPP Release 15), the UE preferentially multiplexes the UCI in PUSCH that is not PUSCH repetition separated from a nominal PUSCH. For example, the UE multiplexes the UCI in the PUSCH of the serving cell 1 in the time unit n, if the PUSCH of the serving cell 1 is a non-repetitive PUSCH, and the PUSCHs of the serving cell 2 are two actual PUSCH repetitions separated from a nominal PUSCH, in the time unit n.

### Fifth method:

When UCIs are derived from services with different reliability and delay requirements, UCIs of different services adopt different multiplexing methods. For example, for the UCI of eMBB service, the first method is selected to multiplex UCI, and for the UCI of URLLC service, the second method is selected to multiplex UCI. Alternatively, the UCI multiplexing methods are separately configured for the UCIs of different services by using a high-layer signaling. For example, for the UCI of eMBB service, the first method is selected to multiplex UCI by the high-level signaling, and for the UCI of URLLC service, the second method is selected to multiplex UCI by the high-level signaling.

The predetermined conditions which the UCI multiplexing needs to satisfy above-described will be described below.

When the UCI is multiplexed in two actual PUSCH repetitions separated from a nominal PUSCH, and the number of OFDM symbols of the PUSCH is the sum P of the number of OFDM symbols of the two actual PUSCH repetitions, the predetermined condition is satisfied, if the number of OFDM symbols of the PUSCH is greater than a predetermined value or a value L1 configured by the high layer signaling, that is, P is greater than or equal to L1.

When the UCI is multiplexed in one of two actual PUSCH repetitions separated from the nominal PUSCH and the number of OFDM symbols of the PUSCH is the number of OFDM symbols Q of the selected actual PUSCH repetition, the predetermined condition is satisfied, if the number of OFDM symbols of the PUSCH is greater than a predetermined value or a value L2 configured by the high layer signaling, that is, Q is greater than or equal to L2.

The number of OFDM symbols of the PUSCH of the above-described condition may be determined by the following methods.

### First method:

The number of OFDM symbols of the PUSCH is determined as the number of OFDM symbols including the number of OFDM symbols occupied by the DMRS, that is, the total number of symbols of the PUSCH;

### Second method:

The number of OFDM symbols of the PUSCH is determined as the number of OFDM symbols remaining after removing the number of OFDM symbols occupied by the DMRS, that is, the total number of symbols of the PUSCH minus the number of OFDM symbols occupied by the DMRS;

### Third method:

For different waveforms of PUSCHs, different methods are used for determining the number of OFDM symbols of the PUSCH. For a DFT-S-OFDM waveform, the OFDM symbols occupied by the DMRS cannot transmit data, and the number of OFDM symbols remaining after removing the number of OFDM symbols occupied by the DMRS is determined as the number of OFDM symbols of the PUSCH of the above-described condition. For an OFDM waveform, an OFDM symbol occupied by the DMRS can transmit data, and the number of OFDM symbols without removing the number of OFDM symbols occupied by the DMRS is determined as the number of OFDM symbols of the PUSCH of the above-described condition.

Based on the resource control method provided by the present application, the present application also provides an electronic device, such as the electronic device 1300 shown in FIG. 13, including: a processor 1301 and a memory 1303. Wherein, the processor 1301 is connected to the memory 1303, for example through the bus 1302. Optionally, the electronic device 1300 may also include a transceiver 1304. It should be noted that, in the actual application, the transceiver 1304 is not limited to one, and the structure of the electronic device 1300 is not a limitation on the embodiments of the present application.

Wherein, the processor 1301 is used in the embodiments of the present application to implement the functions of the first processing unit and the second processing unit shown in FIG. 12. Transceiver 1304 includes a receiver and a transmitter.

The processor 1301 can be a CPU, a general purpose processor, a DSP, an ASIC, an FPGA or other programmable logic device, a transistor logic device, a hardware component, or any combination thereof. It is possible to implement or carry out the various illustrative logical blocks, modules and circuits described in connection with the present disclosure of the present application. The processor 1301 may also be a combination of computing functions, for example, contain a combination of one or more microprocessor, a combination of a DSP and a microprocessor, and the like.

The Bus 1302 may include a path for communicating information between the components described above. The bus 1302 may be a PCI bus or an EISA bus or the like. The bus 1302 may include an address bus, a data bus, a control bus, and the like. For the purpose of representation, only one thick line is shown in FIG. 13, but it does not mean that there is only one bus or one type of bus.

The memory 1303 may be a ROM or other type of static storage device that can store static information and instructions, RAM or other types of dynamic storage devices that can store information and instructions, or EEPROM, CD-ROM or other optical storage, optical disk storage (including compact discs, laser discs, optical discs, digital versatile discs, Blu-ray discs, etc.), magnetic disk storage media or other magnetic storage devices, or any other medium that can be used to carry or store desired program code in the form of an instruction or data structure and that can be accessed by a computer, but not limited thereto.

The memory 1303 is configured to store application codes for executing the solution of the present application, and is controlled by the processor 1301 for execution. The processor 1301 is configured to execute the application code stored in the memory 1303 to implement the actions of the user equipment provided by the embodiment shown in FIG. 12.

In the present application, it is determined whether the first PUSCH resource and the time domain range and/or frequency domain range occupied by the UPI information indication range overlap according to the scheduled first PUSCH resource and the UPI information indication range, wherein the first PUSCH resource is used to transmit the eMBB data, and the UPI information indication range is used to indicate a time domain range and/or a frequency domain range to be occupied by the second PUSCH resource, where the second PUSCH resource is used to transmit URLLC data; if the first PUSCH resource overlaps with the time domain range and/or the frequency domain range occupied by the UPI information indication range, monitoring the PDCCH resource containing the UPI information, and determining whether the first PUSCH resource overlaps with the second PUSCH resource indicated by the UPI information, and if overlapping, not transmitting the eMBB data in the resource overlapping with the second PUSCH resource, which implements effective control of resources, ensures that URLLC data can be transmitted in time, reduces the impact of transmitting URLLC data on transmitting eMBB data, and reduces the waste of transmission resources.

Based on the resource control method provided by the above present application, the present application further provides a computer readable storage medium, the computer readable storage medium includes a memory and a processor, wherein the memory is used to store a computer program, when executed by the processor, implementing the steps of the resource control method described above.

In the present application, it is determined whether the first PUSCH resource and the time domain range and/or the frequency domain range occupied by the UPI information indication range overlap according to the scheduled first PUSCH resource and the UPI information indication range, wherein the first PUSCH resource is used to transmit the eMBB data, and the UPI information indication range is used to indicate a time domain range and/or a frequency domain range to be occupied by the second PUSCH resource, where the second PUSCH resource is used to transmit URLLC data; if the first PUSCH resource overlaps with the time domain range and/or the frequency domain range occupied by the UPI information indication range, monitoring the PDCCH resource containing the UPI information, and determining whether the first PUSCH resource overlaps with the second PUSCH resource indicated by the UPI information, and if overlapping, not transmitting the eMBB data in the resource overlapping with the second PUSCH resource, which implements effective control of resources, ensures that URLLC data can be transmitted in time, reduces the impact of transmitting URLLC data on transmitting eMBB data, and reduces the waste of transmission resources.

In our various embodiments, the time domain position or the time range are expressed as a unit of symbol, slot, or subframe. In some embodiments, the time domain position can be indicated based on at least one of a bitmap, the number of symbols (or the number of subframes, or the number of slots), a start symbol position or a last symbol position. In some embodiments, the time domain behavior is a periodic or a semi-persistent. Thus, the time domain position can be determined based on a periodicity and an offset configured by a higher layer signaling (e.g., RRC signaling).

In our various embodiments, the frequency domain position or the frequency range are expressed as a unit of subcarrier, resource block (physical resource block (PRB), a bandwidth part (BWP). In some embodiments, the frequency domain position can be indicated based on at least one of a bitmap, or the number of subcarriers (or the number of resource blocks, or the number of resource block groups), a reference frequency position, or a indicator for a full bandwidth. In some embodiments, the frequency domain position (or the range) can be determined based on a frequency hopping. Thus, the frequency hoping parameters can be configured with the number of sub-bands and the number of symbols for the frequency hopping.

In some embodiments, the time domain position and the frequency domain position (or range) are jointly indicated with the above methods.

It should be understood by those skilled in the art that the present invention involves apparatuses for performing one or more of operations as described in the present invention. Those apparatuses may be specially designed and manufactured as intended, or may include well known apparatuses in a general-purpose computer. Those apparatuses have computer programs stored therein, which are selectively activated or reconstructed. Such computer programs may be stored in device (such as computer) readable media or in any type of media suitable for storing electronic instructions and respectively coupled to a bus, the computer readable media include but are not limited to any type of disks (including floppy disks, hard disks, optical disks, CD-ROM and magneto optical disks), ROM (Read-Only Memory), RAM (Random Access Memory), EPROM (Erasable Programmable Read-Only Memory), EEPROM (Electrically Erasable Programmable Read-Only Memory), flash memories, magnetic cards or optical line cards. That is, readable media include any media storing or transmitting information in a device (for example, computer) readable form.

It may be understood by those skilled in the art that computer program instructions may be used to realize each block in structure diagrams and/or block diagrams and/or flowcharts as well as a combination of blocks in the structure diagrams and/or block diagrams and/or flowcharts. It may be understood by those skilled in the art that these computer program instructions may be provided to general purpose computers, special purpose computers or other processors of programmable data processing means to be implemented, so that solutions designated in a block or blocks of the structure diagrams and/or block diagrams and/or flow diagrams are performed by computers or other processors of programmable data processing means.

## Claims

1. A method performed by a user equipment (120), UE, in a wireless communication system, the method comprising:
identifying that at least one resource for a transmission of an uplink control information, UCI, on a physical uplink control channel, PUCCH, of a first priority overlaps with at least one resource for a transmission of an uplink data on a physical uplink shared channel, PUSCH, of a second priority; and
in case that the first priority is same as the second priority, transmitting, to a base station, the UCI by multiplexing the UCI on the PUSCH.

2. The method of claim 1,
in case that the first priority is higher than the second priority, the method further comprises:
transmitting, to the base station, the UCI on the PUCCH and cancelling the PUSCH.

3. The method of claim 1,
in case that the second priority is higher than the first priority, the method further comprises:
transmitting, to the base station, the uplink data on the PUSCH and cancelling the PUCCH.

4. The method of claim 1,
wherein one of the first priority and the second priority is for Ultra Reliability Low Latency Communication, URLLC, and the other of the first priority and the second priority is for Enhanced Mobile Broadband, eMBB.

5. The method of claim 1,
wherein the PUSCH is a first actual PUSCH repetition of two actual PUSCH repetitions and the first actual PUSCH repetition includes more than one symbol, the UCI is multiplexed on the first actual PUSCH repetition.

6. A user equipment (120), UE, for a wireless communication system, the UE comprising:
a transceiver (1304); and
a controller coupled with the transceiver (1304) and configured to:
identify that at least one resource for a transmission of an uplink control information, UCI, on a physical uplink control channel, PUCCH, of a first priority overlaps with at least one resource for a transmission of an uplink data on a physical uplink shared channel, PUSCH, of a second priority; and
in case that the first priority is same as the second priority, transmit, to a base station, the UCI by multiplexing the UCI on the PUSCH.

7. The UE of claim 6,
in case that the first priority is higher than the second priority, the controller further configured to:
transmit, to the base station, the UCI on the PUCCH and cancel the PUSCH.

8. The UE of claim 6,
in case that the second priority is higher than the first priority, the controller further configured to:
transmit, to the base station, data on the PUSCH and cancel the PUCCH.

9. The UE of claim 6,
wherein one of the first priority and the second priority is for Ultra Reliability Low Latency Communication, URLLC, data and the other of the first priority and the second priority is for Enhanced Mobile Broadband, eMBB, data.

10. The UE of claim 6,
wherein the PUSCH is a first actual PUSCH repetition of two actual PUSCH repetitions and the first actual PUSCH repetition includes more than one symbol, the UCI is multiplexed on the first actual PUSCH repetition.

11. A method performed by a base station, BS, in a wireless communication system, the method comprising:
receiving, from a user equipment, UE, a physical uplink shared channel, PUSCH, in which an uplink control information, UCI, is multiplexed, in case that at least one resource for the UCI on a physical uplink control channel, PUCCH, of a first priority overlaps with at least one resource for an uplink data on the PUSCH of a second priority,
wherein the first priority is same as the second priority.

12. The method of claim 11,
in case that the first priority is higher than the second priority, wherein the method further comprises:
receiving, from the UE (120), the UCI on the PUCCH,
wherein the PUSCH is cancelled, and
in case that the second priority is higher than the first priority, wherein the method further comprises:
receiving, from the UE (120), the uplink data on the PUSCH,
wherein the PUCCH is cancelled.

13. The method of claim 11,
wherein one of the first priority and the second priority is for Ultra Reliability Low Latency Communication, URLLC, data and the other of the first priority and the second priority is for Enhanced Mobile Broadband, eMBB, data.

14. A base station, BS, for a wireless communication system, the BS comprising:
a transceiver (1304); and
a controller coupled with the transceiver (1304) and configured to:
receive, from a user equipment, UE, a physical uplink shared channel, PUSCH, in which an uplink control information, UCI, is multiplexed, in case that at least one resource for the UCI on a physical uplink control channel, PUCCH, of a first priority overlaps with at least one resource for an uplink data on the PUSCH of a second priority,
wherein the first priority is same as the second priority.

15. The BS of claim 14,
in case that the first priority is higher than the second priority, wherein the controller further configured to:
receive, from the UE, the UCI on the PUCCH,
wherein the PUSCH is cancelled, and
in case that the second priority is higher than the first priority, wherein the controller further configured to:
receive, from the UE, the uplink data on the PUSCH,
wherein the PUCCH is cancelled.

## Patentansprüche

1. Verfahren, das von einem Benutzergerät (120), UE, in einem drahtlosen Kommunikationssystem durchgeführt wird, wobei das Verfahren umfasst:
Identifizieren, dass mindestens eine Ressource für eine Übertragung einer Uplink-Steuerungsinformation, UCI, auf einem physikalischen Uplink-Steuerungskanal, PUCCH, einer ersten Priorität mit mindestens einer Ressource für eine Übertragung von Uplink-Daten auf einem gemeinsam genutzten physikalischen Uplink-Kanal, PUSCH, einer zweiten Priorität überlappt; und
Für den Fall, dass die erste Priorität gleich der zweiten Priorität ist, Übertragen der UCI an eine Basisstation durch Multiplexen der UCI auf dem PUSCH.

2. Verfahren nach Anspruch 1,
wobei für den Fall, dass die erste Priorität höher als die zweite Priorität ist, das Verfahren ferner umfasst:
Übertragen, an eine Basisstation, der UCI, auf dem PUCCH und Löschen des PUSCH.

3. Verfahren nach Anspruch 1,
wobei für den Fall, dass die zweite Priorität höher als die erste Priorität ist, das Verfahren ferner umfasst:
Übertragen der Uplink-Daten auf dem PUSCH an die Basisstation und Löschen des PUCCH.

4. Verfahren nach Anspruch 1,
wobei eine der ersten Priorität und zweiten Priorität für extrem zuverlässige Kommunikation mit geringer Latenzzeit, URLLC, und die andere der ersten Priorität und zweiten Priorität für erweitertes mobiles Breitband, eMBB, gilt.

5. Verfahren nach Anspruch 1,
wobei der PUSCH eine erste tatsächliche PUSCH-Wiederholung von zwei tatsächlichen PUSCH-Wiederholungen ist und die erste tatsächliche PUSCH-Wiederholung mehr als ein Symbol beinhaltet, wird die UCI auf die erste tatsächliche PUSCH-Wiederholung gemultiplext.

6. Benutzergerät (120), UE, in einem drahtlosen Kommunikationssystem, wobei das UE umfasst:
einen Transceiver (1304); und
eine Steuerung, die mit dem Transceiver (1304) gekoppelt ist und konfiguriert ist zum:
Identifizieren, dass mindestens eine Ressource für eine Übertragung einer Uplink-Steuerungsinformation, UCI, auf einem physikalischen Uplink-Steuerungskanal, PUCCH, einer ersten Priorität mit mindestens einer Ressource für eine Übertragung von Uplink-Daten auf einem gemeinsam genutzten physikalischen Uplink-Kanal, PUSCH, einer zweiten Priorität überlappt; und
Für den Fall, dass die erste Priorität gleich der zweiten Priorität ist, Übertragen der UCI an eine Basisstation durch Multiplexen der UCI auf dem PUSCH.

7. UE nach Anspruch 6,
wobei für den Fall, dass die erste Priorität höher als die zweite Priorität ist, die Steuerung ferner konfiguriert ist zum:
Übertragen, an eine Basisstation, der UCI, auf dem PUCCH und Löschen des PUSCH.

8. UE nach Anspruch 6,
für den Fall, dass die zweite Priorität höher als die erste Priorität ist, die Steuerung ferner konfiguriert ist zum:
Übertragen von Daten auf dem PUSCH an die Basisstation und Löschen des PUCCH.

9. UE nach Anspruch 6,
wobei eine der ersten Priorität und zweiten Priorität für Daten für extrem zuverlässige Kommunikation mit geringer Latenzzeit, URLLC, und die andere der ersten Priorität und zweiten Priorität für Daten für erweitertes mobiles Breitband, eMBB, gilt.

10. UE nach Anspruch 6,
wobei der PUSCH eine erste tatsächliche PUSCH-Wiederholung von zwei tatsächlichen PUSCH-Wiederholungen ist und die erste tatsächliche PUSCH-Wiederholung mehr als ein Symbol beinhaltet, wird die UCI auf die erste tatsächliche PUSCH-Wiederholung gemultiplext.

11. Verfahren, das von einer Basisstation, BS, in einem drahtlosen Kommunikationssystem durchgeführt wird, wobei das Verfahren umfasst:
Empfangen eines gemeinsam genutzten physikalischen Uplink-Steuerungskanals, PUSCH, in dem eine Uplink-Steuerungsinformation, UCI, gemultiplext ist, von einem Benutzergerät, UE, für den Fall, dass sich mindestens eine Ressource für die UCI auf einem physikalischen Uplink-Steuerungskanal, PUCCH, einer ersten Priorität mit mindestens einer Ressource für Uplink-Daten auf dem PUSCH mit einer zweiten Priorität überlappt,
wobei die erste Priorität gleich der zweiten Priorität ist.

12. Verfahren nach Anspruch 11,
für den Fall, dass die erste Priorität höher als die zweite Priorität ist, wobei das Verfahren ferner umfasst:
Empfangen der UCI auf dem PUCCH vom UE (120),
wobei der PUSCH gelöscht wird, und
für den Fall, dass die zweite Priorität höher als die erste Priorität ist, wobei das Verfahren ferner umfasst:
Empfangen der Uplink-Daten auf dem PUSCH vom UE (120),
wobei der PUCCH gelöscht wird.

13. Verfahren nach Anspruch 11,
wobei eine der ersten Priorität und zweiten Priorität für Daten für extrem zuverlässige Kommunikation mit geringer Latenzzeit, URLLC, und die andere der ersten Priorität und zweiten Priorität für Daten für erweitertes mobiles Breitband, eMBB, gilt.

14. Basisstation, BS, für ein drahtloses Kommunikationssystem, wobei die BS umfasst:
einen Transceiver (1304); und
eine Steuerung, die mit dem Transceiver (1304) gekoppelt ist und konfiguriert ist zum:
Empfangen eines gemeinsam genutzten physikalischen Uplink-Steuerungskanals, PUSCH, in dem eine Uplink-Steuerungsinformation, UCI, gemultiplext ist, von einem Benutzergerät, UE, für den Fall, dass sich mindestens eine Ressource für die UCI auf einem physikalischen Uplink-Steuerungskanal, PUCCH, einer ersten Priorität mit mindestens einer Ressource für Uplink-Daten auf dem PUSCH mit einer zweiten Priorität überlappt,
wobei die erste Priorität gleich der zweiten Priorität ist.

15. BS nach Anspruch 14,
für den Fall, dass die erste Priorität höher als die zweite Priorität ist, wobei die Steuerung ferner konfiguriert ist zum:
Empfangen der UCI vom UE auf dem PUCCH,
wobei der PUSCH gelöscht wird, und
für den Fall, dass die zweite Priorität höher als die erste Priorität ist, wobei die Steuerung ferner konfiguriert ist zum:
Empfangen der Uplink-Daten vom UE auf dem PUSCH,
wobei der PUCCH gelöscht wird.

## Revendications

1. Procédé exécuté par **un** équipement utilisateur (120), UE, dans un système de communication sans fil, le procédé comprenant :
identifier qu'au moins une ressource pour la transmission d'une information de commande de liaison montante, UCI, sur **un** canal partagé de liaison montante physique, PUCCH, d'une première priorité, chevauche au moins une ressource pour la transmission d'une donnée de liaison montante sur **un** canal partagé de liaison montante physique, PUSCH, d'une deuxième priorité ; et
dans le cas où la première priorité est la même que la deuxième priorité, transmettre, à une station de base, l'UCI en multiplexant l'UCI sur le PUSCH.

2. Procédé de la revendication 1,
dans le cas où la première priorité est plus élevée que la deuxième priorité, le procédé comprend en outre :
transmettre, à la station de base, l'UCI sur le PUCCH et annuler le PUSCH.

3. Procédé de la revendication 1,
dans le cas où la deuxième priorité est plus élevée que la première priorité, le procédé comprend en outre :
transmettre, à la station de base, les données de liaison montante sur le PUSCH et annuler le PUCCH.

4. Procédé de la revendication 1,
dans lequel l'une de la première priorité et de la deuxième priorité concerne la communication ultra-fiable à faible latence, URLLC, et l'autre priorité et la deuxième priorité concernent le haut débit mobile amélioré, eMBB.

5. Procédé de la revendication 1,
dans lequel le PUSCH est une première répétition PUSCH réelle de deux répétitions PUSCH réelles et la première répétition PUSCH réelle comprend plus d'un symbole, l'UCI est multiplexé sur la première répétition PUSCH réelle.

6. Équipement utilisateur (120), UE, pour **un** système de communication sans fil, l'UE comprenant :
**un** émetteur-récepteur (1304) ; et
une commande couplée à l'émetteur-récepteur (1304) et configurée pour :
identifier qu'au moins une ressource pour la transmission d'une information de commande de liaison montante, UCI, sur un canal partagé de liaison montante physique, PUCCH, d'une première priorité, chevauche au moins une ressource pour la transmission d'une donnée de liaison montante sur un canal partagé de liaison montante physique, PUSCH, d'une deuxième priorité ; et
dans le cas où la première priorité est la même que la deuxième priorité, transmettre, à une station de base, l'UCI en multiplexant l'UCI sur le PUSCH.

7. UE de la revendication 6,
dans le cas où la première priorité est plus élevée que la deuxième priorité, la commande est en outre configurée pour :
transmettre, à la station de base, l'UCI sur le PUCCH et annuler le PUSCH.

8. UE de la revendication 6,
dans le cas où la deuxième priorité est plus élevée que la première priorité, la commande est en outre configurée pour :
transmettre, à la station de base, des données sur le PUSCH et annuler le PUCCH.

9. UE de la revendication 6,
dans lequel l'une de la première priorité et de la deuxième priorité concerne des données de communication ultra-fiable à faible latence, URLLC, et l'autre priorité et la deuxième priorité concernent des données de haut débit mobile amélioré, eMBB.

10. UE de la revendication 6,
dans lequel le PUSCH est une première répétition PUSCH réelle de deux répétitions PUSCH réelles et la première répétition PUSCH réelle comprend plus d'un symbole, l'UCI est multiplexé sur la première répétition PUSCH réelle.

11. Procédé exécuté par une station de base, BS, dans un système de communication sans fil, le procédé comprenant :
recevoir, depuis un équipement utilisateur, UE, un canal partagé de liaison montante physique, PUSCH, dans lequel une information de commande de liaison montante, UCI, est multiplexée, dans le cas où au moins une ressource pour l'UCI sur un canal de commande de liaison montante physique, PUCCH, d'une première priorité chevauche au moins une ressource pour une donnée de liaison montante sur le PUSCH d'une deuxième priorité,
dans lequel la première priorité est égale à la deuxième priorité.

12. Procédé de la revendication 11,
dans le cas où la première priorité est plus élevée que la deuxième priorité, dans lequel le procédé comprend en outre :
recevoir, depuis l'UE (120), l'UCI sur le PUCCH,
dans lequel le PUSCH est annulé, et
dans le cas où la deuxième priorité est plus élevée que la première priorité, dans lequel le procédé comprend en outre :
recevoir, depuis l'UE (120), les données de liaison montante sur le PUSCH,
dans lequel le PUCCH est annulé.

13. Procédé de la revendication 11,
dans lequel l'une de la première priorité et de la deuxième priorité concerne des données de communication ultra-fiable à faible latence, URLLC, et l'autre priorité et la deuxième priorité concernent des données de haut débit mobile amélioré, eMBB.

14. Station de base, BS, pour un système de communication sans fil, la BS comprenant :
un émetteur-récepteur (1304) ; et
une commande couplée à l'émetteur-récepteur (1304) et configurée pour :
recevoir, depuis un équipement utilisateur, UE, un canal partagé de liaison montante physique, PUSCH, dans laquelle une information de commande de liaison montante, UCI, est multiplexée, dans le cas où au moins une ressource pour l'UCI sur un canal de commande de liaison montante physique, PUCCH, d'une première priorité chevauche au moins une ressource pour une donnée de liaison montante sur le PUSCH d'une deuxième priorité,
dans laquelle la première priorité est égale à la deuxième priorité.

15. BS de la revendication 14,
dans le cas où la première priorité est plus élevée que la deuxième priorité, dans laquelle la commande est en outre configurée pour :
recevoir, de la part de l'UE, l'UCI sur le PUCCH,
dans laquelle le PUSCH est annulé, et
dans le cas où la deuxième priorité est plus élevée que la première priorité, dans lequel la commande est en outre configurée pour :
recevoir, depuis l'UE, les données de liaison montante sur le PUSCH,
dans laquelle le PUCCH est annulé.
